Europäisches Patentamt

European Patent Office

Office européen des brevets

(11) Publication number: **0 401 541**
**A1**

## (12) EUROPEAN PATENT APPLICATION

(21) Application number: **90108943.3**

(22) Date of filing: **11.05.90**

(51) Int. Cl.⁵: **E05B 19/04**

(30) Priority: **15.05.89 JP 56062/89**
**30.12.89 JP 344086/89**
**06.04.90 JP 37568/90**
**12.04.90 JP 39817/90**

(43) Date of publication of application:
**12.12.90 Bulletin 90/50**

(84) Designated Contracting States:
**DE ES FR GB IT NL**

(71) Applicant: **Terada, Masaji**
**15-15-202, Hiagari 2-chome, Kokurakita-ku**
**Kitakyushu-shi, Fukuoka 803(JP)**

(72) Inventor: **Terada, Masaji**
**15-15-202, Hiagari 2-chome, Kokurakita-ku**
**Kitakyushu-shi, Fukuoka 803(JP)**

(74) Representative: **Herrmann-Trentepohl,**
**Werner, Dipl.-Ing. et al**
**Kirschner, Grosse, Bockhorni Forstenrieder**
**Allee 59**
**D-8000 München 71(DE)**

(54) **Key having a gripping portion made of synthetic resin.**

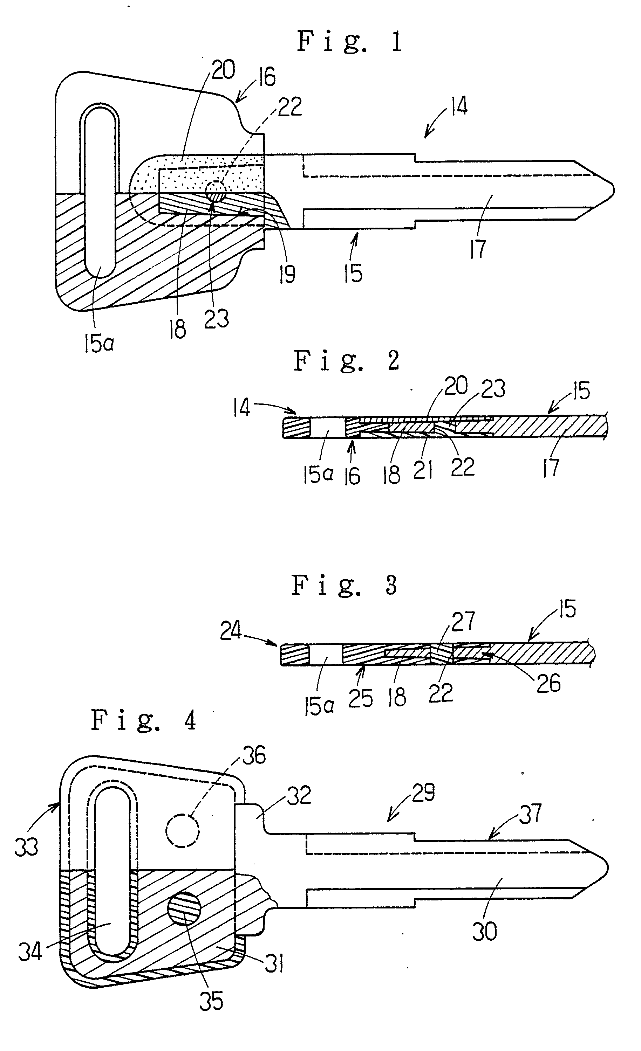

(57) A key having a gripping portion made of synthetic resin shown in Fig.1 and Fig.2 comprises a key body(15) which consists of a blade portion(17) on which key serrations are formed in use and an inserting portion( 18) integrally mounted at the base end portion of the blade portion(17) and a synthetic resin made gripping portion(16) which can cover the outside of the inserting portion(18), wherein the thickness of the inserting portion(18) into which the gripping portion(16) is inserted and mounted is made thinner, and the thickness of the gripping portion(16) which cover the inserting portion(18) is molded to be 0.9 to 1.3 times the thickness of the blade portion(17).

# Fig. 1

BACKGROUND OF THE INVENTION

Field of the invention

This invention relates to a key having a gripping portion made of synthetic resin (including synthetic rubber).

Description of the Prior Art

Keys having a gripping portion made of synthetic resin have been frequently used as the color of synthetic resin can be freely selected.

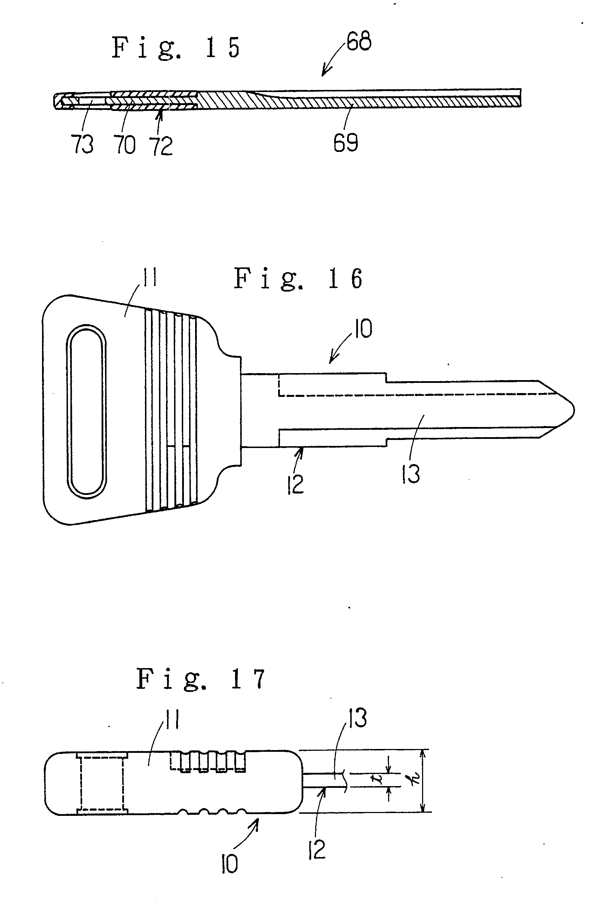

A key 10 in which synthetic resin is used for the conventional gripping portion is shown in Fig. 16 and Fig. 17. As shown in the Figures, the thickness "h" of the gripping portion 11 made of synthetic resin is thicker by three or four times than the thickness "t" of the blade portion 13 (so-called "key shank") on which key serrations are formed on both the sides thereof in use. This is because in the case that the gripping portion 11 is composed of synthetic resin it is necessary that the gripping portion 11 is so formed to have a fixed thickness that the inserting portion of the key body 12, which is formed at the base end portion of the blade portion 13 can be covered thereby.

Therefore, in the case a plurality of keys according to the conventional examples are attached to a key ring or the like, such a problem as they will become bulky in volume occurs, and as the thickness of the gripping portion of a single key is thick, it is difficult to accommodate the corresponding key in a purse or in a commuter pass holder.

SUMMARY OF THE INVENTION

As the invention has been invented to cope with such situations, it is therefore the first object of the present invention to provide a key of which gripping portion made of synthetic resin is formed to be thin and not to be bulky.

It is the second object of the invention to provide a key of which gripping portion made of synthetic resin has sufficient strength even in the case that the inserting portion of the key body is made thin.

And it is the third object of the invention to provide a key of which gripping portion made of synthetic resin is thin, of which key body is of non-bulky plane and for which the molding is easy.

It is furthermore the fourth object of the invention to provide a key of which gripping portion made of synthetic resin can be easily picked up without being adhered onto a plane body when the corresponding key body made to be thin is placed on the corresponding plane body such as a table.

A key having a gripping portion made of synthetic resin, pertaining to the first invention according to the objects, comprises a metal-made key body consisting of a blade portion on which key serrations are formed in use and an inserting portion integrally provided at the base end portion of the corresponding blade portion, and a gripping portion made of synthetic resin to cover the outside of the corresponding inserting portion, wherein the thickness of the inserting portion is made thinner than that of the blade portion and the thickness of the gripping portion made of synthetic resin is composed to be 0.9 through 1.3 times the thickness of the blade portion.

As the inserting portion of a metal-made key body is made thinner than the blade portion in a key having a gripping portion made of synthetic resin according to the first invention, the thickness of the synthetic resin portion which is formed on and below the inserting portion can be secured even though the thickness of the gripping portion is made thin, thereby causing the thickness of the gripping portion to be made 0.9 through 1.3 times the thickness of the blade portion and a key of which gripping portion which is thin as whole is made of synthetic resin to be provided. Therefore, the key is not bulky.

A key having a gripping portion made of synthetic resin according to the second invention is provided, between the blade portion and the inserting portion, with a reinforcement portion of which width is wider than that of the blade portion in a key according to the first invention, wherein such an inserting portion as is thinner than the blade portion and the width thereof is equivalent to or wider than that of the reinforcement portion can be formed by way of the reinforcement portion. Thus, by so composing a key as shown in the above, the strength of the insertion portion which becomes thin can be reinforced, thereby causing the strength to stand against twisting and torque generated in use to be increased.

A key of which gripping portion made of synthetic resin according to the third invention is so composed that in a key according to the first and the second inventions a metal-made inserting portion is exposed to inside a hole for mounting a key ring formed inwardly of the gripping portion. By so composing as shown in the above, as the exposed portion of the hole for the key ring is fixed and held when the inserting portion of the whole key body manufactured in advance is mounted in a die, the inserting portion can not move due to pouring of synthetic resin, thereby causing insertion molding to be facilitated. And when a key ring is used as being attached to a key having a gripping portion made of synthetic resin, it is an advantage that the gripping portion made of synthetic resin is free from any flaw or damage by bringing the key ring into contact with the metal-made portion of the hole for mounting a key ring.

Next, a key having a gripping portion made of synthetic resin according to the fourth invention is so composed that in the above first, second and third inventions the thickness of the gripping portion can be roughly equivalent to the thickness of the blade portion, thereby causing the key to be used with a sense almost similar to a conventional plate-like key and furthermore causing the key body to be given many kinds of color in comparison with the conventional metal-made key.

A key having a gripping portion made of synthetic resin according to the fifth invention is so composed that in the above first, second and third inventions the thickness of the gripping portion can be 1 through 1.3 times the thickness of the blade portion and the gripping portion can be formed to be swelled a little at the middle portion thereof. By so composing the key as shown in the above, even when the key having a gripping portion made of resin is placed on a plane surface (for example, on a desk), it is very easily possible to pick up the key having a gripping portion made of synthetic resin from on a desk or the like as one end of the gripping portion can be lifted up by pushing the other end thereof.

Also, in the above invention, the synthetic resin includes synthetic rubber, and the synthetic resin of the gripper portion is not a mono color but may have a plurality of colors.

BRIEF DESCRIPTION OF THE DRAWINGS

Fig. 1 is a plane view showing a key having a gripping portion made of synthetic resin, according to the first example of the embodiments of the invention,

Fig. 2 is a partially sectional view of the same as above,

Fig.3 is a partially sectional view showing a key having a gripping portion made of synthetic resin, according to the second example of the embodiments of the invention,

Fig. 4 in is a partially notched plane view showing a key having a gripping portion made of resin according to the third example of the embodiments of the invention,

Fig.5 is a partially notched side view of the same as above,

Fig.6 is a plane view showing a key having a gripping portion made of synthetic resin according to the fourth example of the embodiments of the invention,

Fig. 7 is a side view of the same as above,

Fig. 8 is a plane view of a key having a gripping portion made of resin, according to the fifth example of the embodiments of the invention,

Fig. 9 is a plane view showing a key having a gripping portion made of synthetic resin, according to the sixth example of the embodiments of the invention,

Fig. 10 is a plane view of a key having a gripping portion made of synthetic resin, according to the seventh example of the embodiments of the invention,

Fig. 11 is a plane sectional view of the same as above,

Fig. 12 is a side sectional view of the same as above,

Fig. 13 is a plane view of a key having a gripping portion made of synthetic resin, according to the eighth example of the embodiments of the invention,

Fig. 14 is a plane sectional view of the same as above,

Fig. 15 is a side sectional view of the same as above,

Fig. 16 is a plane view of a key having a gripping portion synthetic resin, according to the conventional example, and

Fig. 17 is a partially omitted side view of the same as above.

DETAILED DESCRIPTION OF THE PREFERRED EMBODIMENTS

As shown in Fig.1 and Fig.2, a key 14 having a gripping portion made of synthetic resin, according to the first example of the embodiments of the invention, consists of a metal-made key body 15 and a gripping portion 16 made of synthetic resin, which is attached to the key body 15. The ensuing description explains in details.

The metal-made key body 15 may be made of brass which is one of the examples of metal materials (stainless steel, copper, titan, steel, aluminum, white copper alloy or other metal or alloy thereof may be used for brass. This is the same in the following description hereof), and the outer surface of the metal material is plated with silver (gold plating, nickel plating, chrome plating or other plating is also available). The key body 15 is provided with a blade portion 17 in which serration is provided in use and an inserting portion 18 integrally attached to the blade portion 17. The inserting portion 18 is inserted into the gripping portion 16 made of synthetic resin.

The plate thickness of the blade portion is 1.2 through 4mm or so, and the thickness of the inserting portion 18 to be inserted into the gripping portion 16 is about 40% through 80% of the thickness of the blade portion (usually, 0.48mm through 3.2mm thick) and is gradually tapered to become narrow toward the tip end thereof.

On the other hand, the gripping portion 16 is provided with a slot 15a which is an example of a hole for mounting a key ring, and the material of the gripping portion 16 is made of either of polyether imide resin, polycarbonate resin, polyether sulfone resin, polybutylene terephthalate resin, polyphenylene sulfide resin, polysulfone resin, polyethylene phthalate resin, polyacetal resin, polyamide resin, polypropyrene resin, methacrylic resin, metamorphic PPE resin, ABS resin, AS resin or complex material of the above synthetic resin with glass fiber, complex material which is produced by mixing aluminum powder or stainless steel powder with the above synthetic resin, natural rubber or synthetic rubber (The material of the synthetic resin of the gripping portion is the same as above in all the embodiments after the second embodiment described in the ensuing description).

A notched portion 19 of which plane is the same as that of the inserting portion 18 is formed at the part to jointed together with the inserting portion 18. After the inserting portion 18 is closely inserted into the notched portion 19, caps 20 and 21 made of synthetic resin are placed thereon from the upper side and the lower side thereof, and all of which are jointed together by adhesive or jointed together by a ultrasonic jointing method.

Also, a hole 22 is formed at the inserting portion 18 for preventing the blade portion 17 from coming off from the gripping portion 16, in which a column-like projection 23 provided at either of the caps 20 or 21 or at both thereof can be inserted and fitted. And the projection 23 is heat-sealed or fixed thereto with adhesive.

And in this example of the embodiment, though the inserting portion is gradually tapered to be narrow toward the tip end thereof, it is possible that the inserting portion is made parallel or tapered to be widened toward the tip end thereof.

Consecutively, the ensuing description explains the second through the seventh examples of the embodiments of the invention shown in and after Fig. 3. the same component members are given the same reference numbers, and the detailed explanation thereof is omitted.

Fig. 3 shows a partially sectional view of a key 24 having a gripping portion made of synthetic resin, according to the second example of the embodiments of the invention. As shown in Fig. 3, a mounting hole 26 into which the inserting portion 18 of the metal-made key body 15 is inserted is formed at the gripping portion 25, and the inserting portion 18 is jointed to the mounting hole 26 by adhesive or heat seal. Then, the key body 15 and the gripping portion 25 are jointed together with each other by inserting and fixing a column-like set pin 27 made of synthetic resin in a hole 22 formed at the inserting portion 18.

Also, in the above embodiments, it is possible to promote the fashionability and/or distinguishability of the key itself by utilizing different color tones for the caps 20 and 21 and the set pin 27 from that of the synthetic resin to be used for the gripping portions 16 or 25.

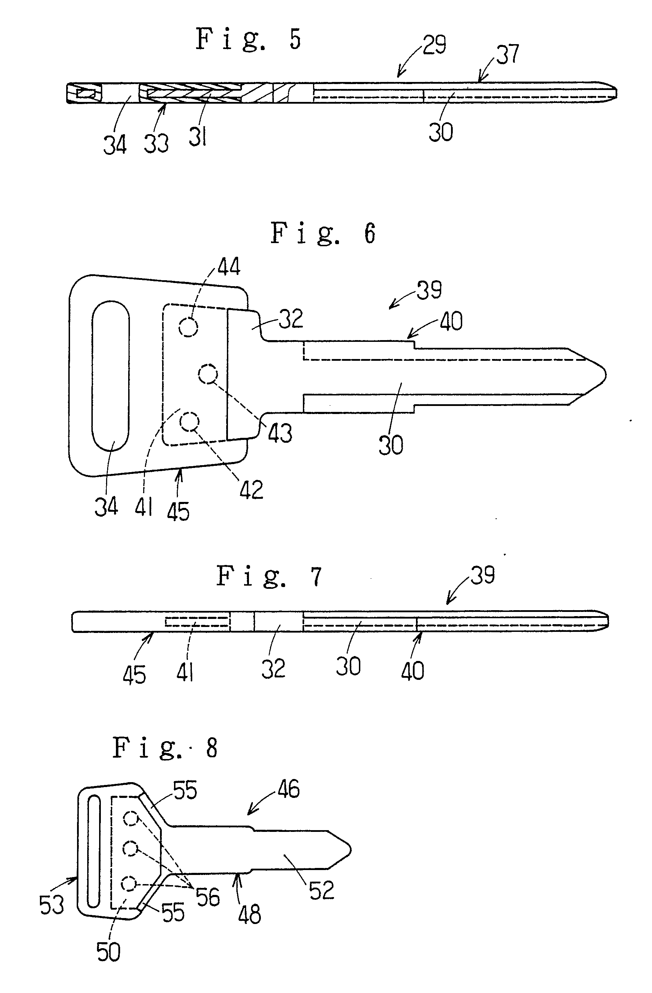

Next, a key 29 having a gripping portion made of synthetic rein, according to the third example of the embodiments of the invention shown in Fig. 4 and Fig.5, is explained hereinafter. A reinforcement portion 32 which is widened to both the sides of the blade portion is formed at the base end portion of the blade portion 30 on which key serration is made in use, i.e., at the middle between the blade portion 30 and the inserting portion 31. And the thickness of the inserting portion 31 is 40 through 80% of the blade portion 30 and is smaller in size than the gripping portion 33, and the inserting portion 31 is provided with a considerably long slot 34 which will be for accommodating a key ring and two small openings 35 and 36.

The thickness of the gripping portion 33 made of synthetic resin, which covers the inserting portion 31 is roughly equivalent to that of the blade portion 30. After the inserting portion 31 of the metal-made key body 37 is fixed at an appointed position of a die, the gripping portion 33 is so injection-molded by injection molding of liquid type synthetic resin material that the inserting portion 31 can be covered. However, it is good that in some cases, for example, a two-split type gripping portion which has been molded to an appointed shape in advance is prepared, and the gripping portion and the inserting portion 31 are adhered and fixed together with adhesive or by an electromagnetic heating method or a ultrasonic wave heating method.

Therefore, in a key 29 having a gripping portion made of synthetic resin, it is possible that the gripping portion 33 is made of synthetic resin of which color tone is different from that of a metal-made key body 37. And as the thickness of the gripping portion 33 is equivalent to that of the blade portion 30, there is an excellent feature that the keys according to the invention do not become bulky even though a plurality of keys are attached to a key ring. Furthermore, when using these keys, as a wider reinforcement portion 32 is provided at the portion where torque is transmitted from the gripping portion 33 to the blade portion 30, the keys according to the invention are very scarcely damaged or broken at the jointing portion between the gripping portion 33 and the inserting portion 31, that is, at the part forming the inserting portion 31 by forming a stage at the key body 37.

Consecutively, the ensuing description explains the difference between a key 39 having a gripping portion made of synthetic resin, according to the fourth example of the embodiments of the invention shown in Fig.6 and Fig.7 and the key 29 having a gripping portion made of resin. In the key 39 of which gripping portion, the thickness of the inserting portion 41 of the metal-made key body 40 is 40 through 80% of the thickness of the blade portion 30, and the thickness of the gripping portion 45 is 0.9 through 1.3 times the thickness of the blade portion 30. And the area of the inserting portion 41 is comparatively small and is integrally jointed together with the blade portion 30 by way of a reinforcement portion 32 which is widened toward both the sides thereof.

And small holes 42 through 44 are formed on the inserting portion 41, thereby causing the synthetic resin which composes the gripping portion 45 to be sufficiently jointed to the inserting portion 41. The key 39 having a gripping portion made of synthetic resin can be easily insertion-molded as the area of the inserting portion 41 is comparatively narrow.

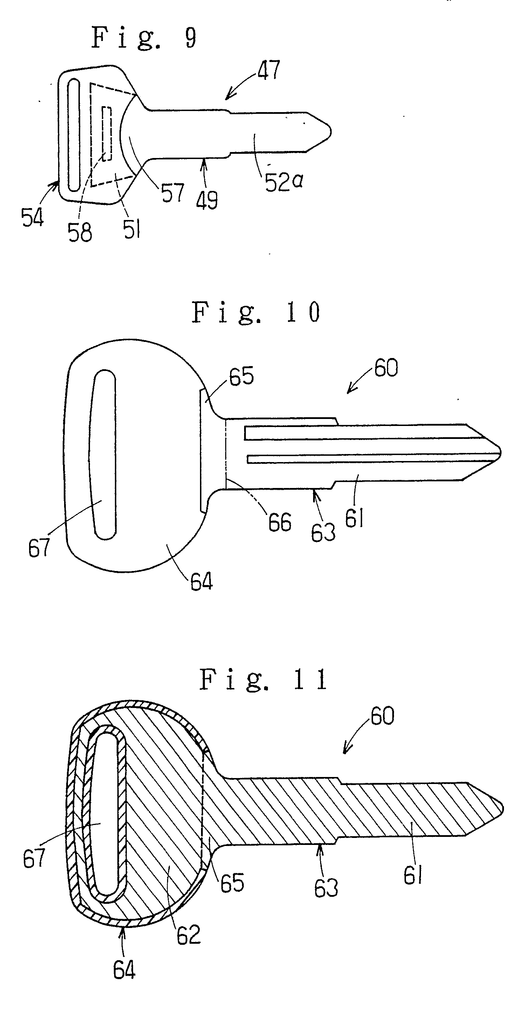

Fig. 8 and Fig.9 show keys 46 and 47 having a gripping portion made of synthetic resin, according to the fifth and the six examples of the embodiments of the invention, respectively. The thickness of the inserting portions 50 and 51 of the metal-made key bodies 48 and 49 is 40 % through 80% of the thickness of the blade portion 52 and 52a, and the gripping portions 53 and 54 which are made of synthetic resin can cover the inserting portions 50 and 51 are roughly equivalent to the thickness of the blade portion 52 and 52a, respectively.

In a key 46 having a gripping portion made of synthetic resin as shown in Fig. 8, the reinforcement portion 55 which is located at the middle between the inserting portion 50 and the blade portion 52 extends toward both the sides of the gripping portion 53 and forms a wide and tough inserting portion 50 which is provided with three circular holes 56.

And in a key 47 having a gripping portion made of synthetic resin as shown in Fig. 9, the reinforcement portion 57 which is located at the middle between the inserting portion 51 and the blade portion 52a is wide and arc-shaped, and the inserting portion 51 to be connected to the gripping portion is provided with a slot 58.

In keys 46 and 47 having a gripping portion made of synthetic resin, the inserting portions 50 and 51 are reinforced by reinforcement portions 55 and 57, thereby causing easy-to-use keys having a thin gripping portion 53 or 54 to be provided.

Consecutively, the ensuing description explains a key 60 having a gripping portion made of synthetic resin according to the seventh example of the embodiments of the invention as shown in Fig. 10 through Fig. 12. As shown in Fig. 10 through Fig. 12, a key having a gripping portion made of synthetic resin according to one of the embodiments of the invention is so composed that the key 60 comprises a metal-made key body 63 which is provided with a blade portion 61 on which key serrations are formed in use and an inserting portion 62 integrally jointed to the blade portion 61, of which thickness is formed to be thinner than the blade portion 61, and a synthetic resin made gripping portion 64 into which the inserting portion 62 is inserted.

The key body 63 is made of such machinable metal as brass, steel, copper, stainless steel, aluminum, white copper alloy, etc., thereby causing both the sides of the blade portion 61 to be machined for key serrations. And the thickness of the inserting portion 62 integrally secured to the blade portion 61 is made to be thinner by 40% through 80% than the thickness of the blade portion 61.

And at the middle between the blade portion 61 and the inserting portion 62, the reinforcement portion 65 which is widened toward both the sides thereof is formed, thereby causing the width of the inserting portion 62 to be sufficiently secured. In the embodiment, the blade portion 61, the reinforcement portion 65 and the inserting portion 62 are integrally made of the same metal. However, as the inserting portion may be weakened in strength if the thickness thereof is made thinner than the blade portion 61, it is possible that only the inserting portion 62 is made of stainless steel, steel or the like which has reasonable strength, the blade portion 61 is made of brass, etc. and they are welded together. In this case, both the inserting portion 62 and the blade portion 61 can be welded at the boundary thereof, and they can be welded together at such a part as have somewhat thickness as shown with a two-dashed line 66 in Fig. 10.

The gripping portion 64 is so composed as to cover the whole inserting portion 62 and is made of synthetic resin or synthetic rubber.

Though the jointing portion between the gripping portion 64 and the reinforcement portion 65 is of the same level of height, the surface and the rear surface of the gripping portion 64 are made to be swelled (by 100mm through 1000mm at the sectional radius) at the middle thereof, and the maximum height thereof is 1.1 to 1.3 times the blade portion 61.

In order to produce a key 60 having a gripping portion made of synthetic resin, a die having a shape of the gripping portion 64 is to be prepared in advance, and a key body 63 which is mass-produced in advance is placed and synthetic resin is injected in the die. In this case, all the gripping portions 64 is molded as one. Therefore, there is an advantage that the molding thereof can be easily carried out.

It is possible to make simultaneous molding with two colors, by using synthetic resin of different colors for the gripping portions 64.

Also, it is possible to mark the name of a key maker and the kind thereof on the gripping portion 64. A hole for mounting a key ring is indicated by 67 in the Figure.

In the case that a key 60 having a gripping portion made of synthetic resin is placed on a desk, etc., one end of the gripping portion may be lifted up by pushing the other end thereof, thereby causing the key 60 having a gripping portion made of synthetic resin to be easily picked up.

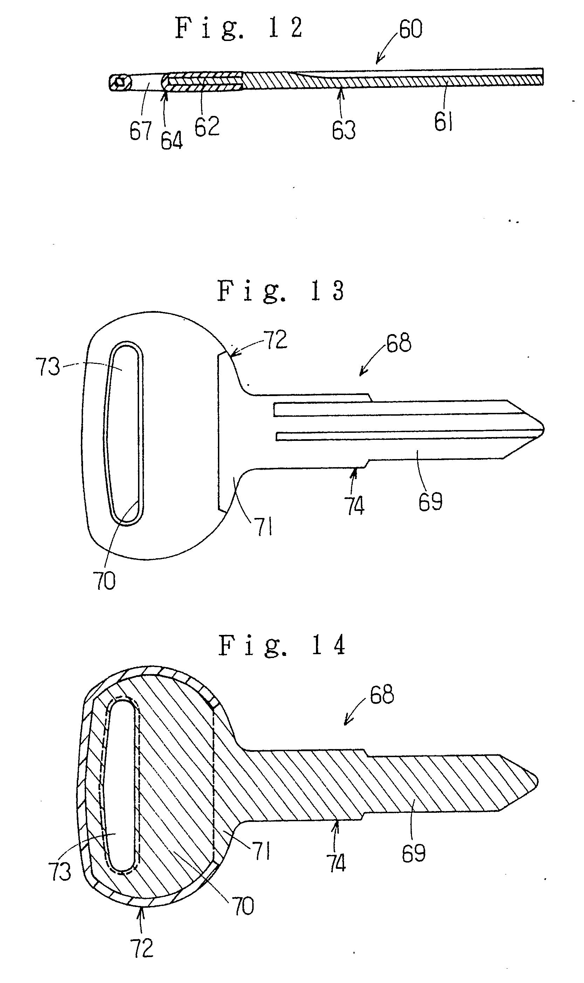

Next, the ensuing description explains a key 68 having a gripping portion made of synthetic resin according to the eighth example of the embodiments of the invention as shown in Fig. 13 through Fig. 15.

The key 68 having a gripping portion made of synthetic resin is composed of a metal-made key body 74 and a gripping portion 72 which is mounted to the inserting portion 70 of the key body 74.

In the embodiment, the thickness of the inserting portion 70 which is integrally jointed to the blade portion 69 is made to be 0.4 through 0.8 times the thickness of the blade portion 69.

A reinforcement portion 71 which is made sufficiently wider than the width of the blade portion 69 is formed at the middle between the blade portion 69 and the inserting portion 70, that is., at the base end side of the blade portion 69, thereby causing the width of the inserting portion 70 to be sufficiently secured.

The gripping portion 72 can cover almost the whole inserting portion 70, and the thickness thereof is roughly equivalent to (the range from 1.0 through 1.3 times is available) the thickness of the reinforcement portion 71, and the jointing portion between the gripping portion 72 and the reinforcement portion 71 is of the same level of height. However, the surface and the rear surface of the gripping portion 72 are formed to be swelled at the middle thereof (by 100 through 1000mm at the sectional radius) and the maximum height thereof is 1.1 to 1.3 times the height of the blade portion 69.

On the other hand, a slot 73 which is an example of a hole for mounting a key ring is formed at the corresponding gripping portion 72. However, the above metal-made inserting portion 70 is exposed inwardly of the slot.

In order to produce a key 68 having a gripping portion made of synthetic resin, a die having a shape of the gripping portion 72 is to be prepared in advance, and a key body 7in which is mass-produced in advance is placed and synthetic resin is injected in the die. In this case, as the inserting portion 70 which is exposed to the slot 73 can be supported by the die, the inserting portion 70 is not pushed and does not move by the synthetic resin which will be injected. The molding can be carried out under such a condition that the inserting portion 70 can be placed at the middle of the gripping portion 72. In addition, as all the gripping portions 72 can be molded as one, there is an advantage that the injection molding can be easily conducted. In the embodiment, though a metalmade inserting portion is exposed to the whole circumstance of the slot for mounting a key ring, it is possible to expose the inserting portion partially (for instance, only to one side of the slot).

In addition, it is possible to make simultaneous molding with two colors, by using synthetic resin of different colors for the gripping portions 72.

Also, though the gripping portions 64 and 72 are so made as to be swelled at the middle thereof in the above embodiments, they can be made to be flat, too. In this case, it is preferable that the thickness of the blade portion, the reinforcement portion and the gripping portion are made roughly equivalent thereto each other. It is possible to set the thickness thereof in the range from 0.9 to 1.3 times according to the uses.

Moreover, though there are various shapes (plain type, grooved type, notched type, staged type, etc.) of the blade portion to be inserted into a key hole according to the uses of a key, the invention is not limited to these shapes.

UTILIZATION IN THE INDUSTRIES CONCERNED

As in a key having a gripping portion made of synthetic resin according to the first through the fifth inventions the thickness of the gripping portion is 0.9 through 1.3 times the thickness of the blade portion, it is possible to provide the keys of which gripping portion does not become bulky even though a plurality of keys are mounted in a key holder.

As the synthetic resin which composes the gripping portion covers almost the whole inserting portion of the key body, insert-molding by a die can be easily carried out and mass production becomes available, too.

As synthetic resin is used for the gripping portion, the color of the gripping portion can be changed according to the uses.

Especially, as in a key having a gripping portion made of synthetic resin according to the second invention the inserting portion which is made thin can be widened, the key can sufficiently stand against twisting and torque, which may be generated in using a key, and it is possible to provide a key of longer service life, having a gripping portion made of synthetic resin.

Also, in addition to the above effects, as in a key having a gripping portion made of synthetic resin according to the third invention a metal-made inserting portion is exposed inwardly of a hole for mounting a key ring, it becomes remarkably easy to conduct insert-molding and furthermore there is an advantage that the circumstance of the hole for mounting a key ring in use is hardly free from any flaw or damage.

As in a key having a gripping portion made of synthetic resin according to the fourth invention the thickness of the gripping portion is roughly equivalent to the thickness of the blade portion, it can be used with also the same feeling as that of the conventional metal made keys.

And in the case that a key having a gripping portion made of synthetic resin according to the fifth invention is placed on a table, etc. under such a condition as to be closely adhered to the table surface, one end of the gripping portion can be lifted up by only pushing the other end thereof, thereby causing the key having a gripping portion made of synthetic resin to be easily picked up.

## Claims

(1). A key having a gripping portion made of synthetic resin comprising;
a key body which consists of a blade portion on which key serrations are formed in use and an inserting portion integrally mounted at the base end portion of the corresponding blade portion and,
a synthetic resin made gripping portion which can cover the outside of the inserting portion,
is characterized in that the thickness of the inserting portion is made thinner than the thickness of the blade portion and the thickness of the synthetic resin made gripping portion is made to be 0.9 through 1.3 times the thickness of the blade portion.

(2). A key having a gripping portion made of synthetic resin claimed in the claim (1), wherein a reinforcement portion which has wider width than the width of the blade portion at the middle between the blade portion and the inserting portion is provided, and the width of the inserting portion which is integrally jointed to the blade portion is equivalent to or wider than the width of the corresponding reinforcement portion.

(3). A key having a gripping portion made of synthetic resin claimed in either of the claim (1) or the claim (2), wherein a metal-made inserting portion is exposed inwardly of a hole for mounting a key ring, which is formed inwardly of the gripping portion.

(4). A key having a gripping portion made of synthetic resin claimed in either of the claim (1), the claim (2) or the claim (3), wherein the thickness of the gripping portion is roughly the same as that of the blade portion.

(5). A key having a gripping portion made of synthetic resin claimed in either of the claim (1), the claim (2) or the claim (3), wherein the thickness of the gripping portion is 1 through 1.3 times the thickness of the blade portion and the gripping portion is made to be swelled a little at the middle thereof.

# Fig. 1

# Fig. 2

# Fig. 3

# Fig. 4

Fig. 5

Fig. 6

Fig. 7

Fig. 8

Fig. 9

Fig. 10

Fig. 11

Fig. 12

60

67  64  62  63  61

Fig. 13

73  72  68

70  71  74  69

Fig. 14

68

73  71  74  69

70

72

Fig. 15

68

73  70  72          69

Fig. 16

11

10

12      13

Fig. 17

11          13

$x$
$h$

10      12

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl⁵) |
|---|---|---|---|
| A | <u>GB - A - 2 155 988</u> (BAUER) * Fig. 9; claims 1-17 * ---- | 1-5 | E 05 B 19/04 |

TECHNICAL FIELDS SEARCHED (Int Cl⁵)

E 05 B

The present search report has been drawn up for all claims

| Place of search | Date of completion of the search | Examiner |
|---|---|---|
| VIENNA | 04-10-1990 | CZASTKA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82